# EUROPÄISCHE PATENTSCHRIFT

(11) **EP 2 638 795 B1**
(45) Veröffentlichungstag und Bekanntmachung des Hinweises auf die Patenterteilung: **13.01.2016**
(21) Anmeldenummer: 13157541.7
(22) Anmeldetag: 04.03.2013
(51) Int. Cl.: A01D 89/00

(54) **Erntevorrichtung zum Aufnehmen von Pflanzen**
Harvesting device for picking-up plants
Dispositif de cueillette destiné à recevoir des plantes

(30) Priorität: 13.03.2012 DE 102012004837
(43) Veröffentlichungstag der Anmeldung: 18.09.2013
(73) Patentinhaber: CLAAS Saulgau GmbH, 88348 Bad Saulgau (DE)
(72) Erfinder: Pflanze, Sascha, 14822 Brück (DE); Sauter, Stefan, 88529 Zwiefalten (DE); Loebe, Stefan, 88348 Bad Saulgau (DE)

(56) Entgegenhaltungen:
- EP-A1- 1 813 142
- EP-A2- 2 042 276
- EP-B1- 1 757 182
- DE-B4- 10 212 722

## Beschreibung

Die Erfindung betrifft eine Erntevorrichtung zum Ernten und/oder Aufnehmen von auf dem Feld angeordneten Pflanzen oder Pflanzenteilen nach dem Oberbegriff des Anspruchs 1.

### Stand der Technik

In der Landwirtschaft sind unterschiedlichste Erntemaschinen im Einsatz, die Erntegut wie Pflanzen oder Pflanzenteile auf dem landwirtschaftlichen Feld aufnehmen können. Neben Mähdreschern und Feldhäckslern, die frontseitig entsprechende Aufnehmer und zudem Mähaggregate aufweisen, sind in der Landwirtschaft vor allem auch heckseitig bzw. hinten angeordnete/angehängte Erntemaschinen im Einsatz.

Bei den heckseitig angehängten Erntemaschinen sind neben Rund- oder Quaderballenpressen vor allem auch Ladewagen, Silierwagen oder Kombiwagen, aber auch Kartoffelvollernter, Rübenernter oder dergleichen bereits in unterschiedlichsten Varianten im Einsatz.

Erntemaschinen mit so genanntem Pick-up, das heißt Aufnehmer, die für stengliges Erntegut wie Heu, Gras, Stroh, Silage oder dergleichen ausgebildet sind und Aufnahmezinken aufweisen, die um eine horizontale Drehachse rotieren, sind vor allem bei so genannten Lade-, Silierwagen oder dergleichen sowie bei Ballenpressen etc. im Einsatz. Diese Pick-ups weisen üblicherweise Stützräder auf, mit denen diese auf dem Feld abgestützt sind und aufgrund einer vergleichsweise freien Aufhangung derart ausgestaltet sind, dass diese bei Unebenheiten wahrend des Erntevorgangs bzw. Aufnahmevorgangs üblicherweise weitgehend frei nach oben (bis zu einem mechanischen Anschlag) verstellbar sind. Nachteilig bei derartigen Stutzradern ist jedoch, dass bei besonders kleinen Radien bzw. starken Lenkeinschlagen diese quer bewegt werden und hierdurch eine Verletzung der Grasnarbe entstehen kann.

Weiterhin ist bei bisherigen Pick-up-Systemen von Nachteil, dass bei einer großen Verstellung des Pick-ups nach oben wahrend des Erntevorgangs bzw. Aufnahmevorgangs es zu einer starken Winkelverstellung der Aufhangung bzw. es zu einer erheblichen Verkleinerung des Offnungswinkels des Pick-ups in Bezug zum nachfolgenden Ladesystem wie ein Laderotor oder dergleichen bzw. es zu einer hiermit generierten Verkleinerung des Gutstromquerschnittes der Pick-up kommt. Dies kann zu Beeinträchtigungen des Erntevorgangs durch zum Beispiel Verstopfen der Gutannahme fuhren. Die hierdurch generierten Stillstandzeiten bedeuten eine Beeinträchtigung bzw. Verringerung der Effizienz des Arbeitsablaufs.

Aus den Druckschriften DE 102 12 722 B4 oder DE 10 2009 017 400 A1 sind beispielsweise Erntemaschinen wie Ladewagen mit Pick-up bekannt, wobei mit Hilfe von Sensoren die Hohenlage des Pick-ups bzw. der Offnungswinkel des Pick-ups in Bezug zum Laderotor oder Hindernisse vor der Pick-up ermittelt werden. So kann hierdurch beispielsweise der Pick-up mittels eines Hubzylinders nach oben gezogen werden. Dementsprechend werden zum Teil vorhandene Bodenunebenheiten erkannt und durch das Nachstellen des Pick-ups bzw. der hohenverstellbaren Aufnahmevorrichtung wird ermoglicht, dass der Pick-up nicht durch Hindernisse oder dergleichen beeinträchtigt wird bzw. nicht zu sehr in die Erde hineingedruckt wird.

EP 2 042 276 A2 offenbart eine Landwirtschaftliche Maschine, umfassend ein Fahrzeug, eine mit dem Fahrzeug verbindbare und motonsch betatigbare Hubvorrichtung, an welche em zu bewegendes Anbaugerät koppelbar ist, und eine Einrichtung zur Bestimmung der Position der an das Fahrzeug gekoppelten Hubvorrichtung und/oder des an die Hubvorrichtung gekoppelten Anbaugerates, wobei die Einrichtung eine elektronische Steuereinheit umfasst, welche mit Sensoren zur Positionsbestimmung der Hubvorrichtung und/oder des Anbaugerätes verbunden ist, und wobei die Sensoren als Beschleunigungssensoren ausgebildet sind, wobei wenigstens ein erster Beschleunigungssensor an der Hubvorrichtung und/oder am Anbaugerät und wenigstens ein als Beschleunigungssensor ausgebildeter Referenzsensor am Fahrzeug positioniert ist, wobei von der elektronischen Steuereinheit ein Positionssignal für die Hubvorrichtung und/oder für das Anbaugerät durch eine Relativmessung der Signale des wenigstens ersten Beschleunigungssensors zu den Signalen des Referenzsensors generierbar ist.

Darüber hinaus ist aus der EP 1 757 182 B1 bereits eine Ballenpresse bekannt, wobei mittels einem Naherungssensor bzw. Hohensensor die Winkelstellung bzw. die Auslenkung des Pick-ups bzw. der Aufnahmevorrichtung gegenüber dem Tragrahmen der Presse ermittelt wird und aufgrund dieser Information eine höhenverstellbare Deichsel bzw. Anhängevorrichtung der Presse über einen Hubzylinder verstellt wird. Hierdurch ist es nunmehr möglich, den Öffnungswinkel des Pick-ups bzw. der Aufnahmevorrichtung möglichst in einem gegebenen Rahmen zu halten. Es hat sich gezeigt, dass ein derartiges System zu einer deutlichen Verbesserung gegenüber frühren bzw. einfachen Systemen führt, da vielfach ein Beeinträchtigen der Erntegutaufnahme bzw. ein Verstopfen des Ladesystems durch zu kleinen Öffnungswinkel des Pick-ups wirkungsvoll verhindert werden kann. Allerdings hat sich gezeigt, dass dies jedoch nicht vollständig beseitigen kann.

### Aufgabe und Vorteile der Erfindung

Aufgabe der Erfindung ist es demgegenüber, eine Erntevorrichtung zum Ernten und/oder Aufnehmen von auf dem Feld angeordneten Pflanzen oder Pflanzenteilen vorzuschlagen, die die Erntegutaufnahme weiter verbessert und/oder die Betriebssicherheit weiter erhöht.

Diese Aufgabe wird, ausgehend von einer Erntevorrichtung der einleitend genannten Art, durch Merkmale des Anspruchs 1 gelöst. Durch die in den Unteransprüchen genannten Maßnahmen sind vorteilhafte Ausführungen und Weiterbildungen der Erfindung möglich.

Dementsprechend zeichnet sich eine erfindungsgemäße Erntevorrichtung dadurch aus, dass wenigstens eine Inertialsensorvorrichtung zum Erfassen einer translatorischen und/oder rotatorischen Beschleunigung der Aufnehmereinheit vorgesehen ist.

Mit Hilfe der Intertialsensorvorrichtung kann die Beschleunigung der Aufnehmereinheit direkt oder indirekt erfasst und in vorteilhafter Weise zu einer Kontrolle bzw. Steuerung der Erntevorrichtung, insb. der Aufnehmereinheit und/oder sonstiger Komponenten der Erntevorrichtung, verwendet werden.

Im Gegensatz zu Hinderniserkennungssensoren bzw. -systemen oder Höhensensoren bzw. -systemen gemäß dem Stand der Technik können gemäß der vorliegenden Erfindung zum einem in der Praxis auftretende Vorkommnisse bzw. Fälle erfasst werden, die der Stand der Technik bislang nicht erkennen konnte. Beispielsweise kann der Stand der Technik nur bedingt oder gar nicht ein Hindernis bzw. eine Mulde, ein Schlagloch oder dergleichen erfassen, in das beispielsweise ein Laufrad der Erntevorrichtung bzw. des Ladewagens oder des Zugfahrzeuges hinein fährt und hierdurch eine relative Anhebung der Aufnehmervorrichtung resultiert.

Zum anderen kann gemäß der Erfindung mit Hilfe der Beschleunigungserfassung auch deutlich schneller bzw. auch frühzeitiger als der Stand der Technik ein relevantes Signal bzw. eine Information generiert werden, die vorteilhaft für ein Einleiten von Gegenmaßnahmen bzw. Ausgleichsmaßnahmen verwendet werden kann. So kann zum Beispiel sehr frühzeitig, beispielsweise bei einem sehr großen Öffnungswinkel der Aufnehmereinheit, eine starke Beschleunigung, vorzugsweise eine Grenzwertüberschreitung einer Beschleunigung, als Information dafür genützt werden, dass die Aufnehmereinheit bzw. der Pick-up eine nachteilige Veränderung des Öffnungswinkels gegenüber dem Tragrahmen erfahren würde, wenn nicht unmittelbar eine Gegenmaßnahme eingeleitet wird. Das heißt aufgrund der großen Beschleunigung kann simuliert bzw. errechnet werden, dass die Gutstromaufnahme aufgrund weiter stattfindender Verstellung der Aufnahmevorrichtung in vertikaler Richtung nach oben bzw. bei einem weiteren Verkleinern des Öffnungswinkels es zu Problemen bei der Gutstromaufnahme kommen könnte.

Mit Hilfe einer vorteilhaften Kontrolleinheit bzw. Steuereinheit, insbesondere mit Hilfe eines vorteilhaften Datenspeichers und/oder eines vorteilhaften Soll-Ist-Vergleiches, kann die zu erwartende Überschreitung eines Grenzwertes der Anhebung der Aufnahmevorrichtung bzw. eine zu starke Verringerung des Öffnungswinkels des Pick-ups vorausberechnet werden. Gemäß der Erfindung kann dies in vorteilhafter Weise mit Hilfe der Einleitung bzw. Durchführung von Ausgleichsmaßnahmen bzw. Gegenmaßnahmen wirkungsvoll verhindert werden.

In einer vorteilhaften Ausführungsform der Erfindung weist die Verstelleinheit wenigstens eine Rotationsachse zum Verstellen und Rotieren der Aufnehmereinheit um die Rotationsachse auf. Vielfach werden bisher gebräuchliche Aufnehmereinheiten bereits rotatorisch am Tragrahmen der Erntevorrichtung des Ladewagens oder der Ballenpresse etc. aufgehängt. Somit kann auf diese Technologie für die Erfindung zurückgegriffen werden, was sich günstig bzgl. der Kosten auswirkt.

Vorzugsweise ist die Inertialsensorvorrichtung als Drehratensensor zum Erfassen der Rotations- bzw. Winkelbeschleunigung um die Rotationsachse ausgebildet. Es gibt bereits handelsübliche Drehratensensoren, womit eine Rotationsbeschleunigung bzw. Winkelbeschleunigung ermittelt und bevorzugt an eine vorteilhafte Kontrolleinheit bzw. Steuereinheit oder dergleichen weitergeleitet werden kann. Die entsprechend vorteilhaften Informationen können dann die Kontrolleinheit bzw. Steuereinheit beispielsweise zur Einleitung von Ausgleichsmaßnahmen bzw. Gegenmaßnahmen verwenden.

Grundsätzlich sind unterschiedlichste Beschleunigungssensoren in Form von Trägheitssensoren oder dergleichen verwendbar, die z.B. unabhängig von der Art der Aufhängung sind. Beispielsweise existieren bereits Halbleiterträgheitssensoren, die sehr klein und kostengünstig sind. Derartige Trägheitssensoren können an vorteilhaften Stellen an der Aufnehmereinheit bzw. dem Pick-up fest fixiert werden und ihre Informationen bzgl. Beschleunigung der Aufnehmereinheit in vorteilhafter Weise per elektrischer Leitung mittels Draht oder auch drahtlos mittels Sender und Empfänger an eine vorteilhafte elektronische Kontrolleinheit bzw. Steuereinheit übermitteln.

Generell kann die vorteilhafte Beschleunigung der Aufnehmereinheit gemäß der Erfindung nicht nur direkt als Beschleunigung, sondern auch als Geschwindigkeitsänderung pro Zeiteinheit bzw. als zeitliche Ableitung der Geschwindigkeit und/oder als zweite Ableitung des Ortsvektors bzw. des Verstellweges der Aufnehmereinheit gemäß der Erfindung ermittelt werden. Beispielsweise kann mit Hilfe eines Abstandsensors und/oder Höhensensors die Position, insbesondere die vertikale Position der Aufnehmereinheit, ermittelt und bei Veränderung der Position mit Hilfe einer Zeitdauer die Beschleunigung gemäß der Erfindung ermittelt werden. Zum Beispiel bei Änderung eines Abstands der Aufnehmereinheit gegenüber dem Boden oder dem Tragrahmen bei relativ kleiner Zeitdauer kann ein festgesetzter Grenzwert ein Stellsignal auslösen. So kann beim Unterschreiten einer vorteilhaften vorgegebenen Zeitdauer (Grenzwert) für eine vorgegebene Abstandsänderung bzw. Wegstrecke mit Hilfe einer elektronischen Berechnungseinheit oder dergleichen die Beschleunigung gemäß der Erfindung ermittelt werden.

Im Sinn der vorliegenden Erfindung kann auch auf eine explizite Berechnung der Beschleunigung in einer elektronischen Kontrolleinheit verzichtet werden, da bereits bei gegebenen Abständen bzw. einer festgelegten Abstandsdifferenz bzw. Positionsänderung die hierfür benötigte Zeitdauer proportional zur Beschleunigung ist und somit ein Unterschreiten eines vorgegebenen Grenzwerts für diese Zeitdauer einer Überschreitung eines Grenzwertes der Beschleunigung entspricht, auch ohne dass diese exakt als berechneter Wert ermittelt wird bzw. vorliegt. Entsprechendes trifft auch für einen Rotationswinkel um die Rotationsachse gemäß der Erfindung zu. Das heißt dass in Bezug zu einer Winkeldifferenz und der hierfür benötigten Zeitdauer bzw. ein Unterschreiten einer vorgegebenen Zeitdauer für einen festgelegten Winkelbereich dies als Information für die Beschleunigung gemäß der Erfindung bzw. für ein Überschreiten eines vorgegebenen Grenzwertes verwendet werden kann. Dies kann dann entsprechende Stellsignale für Gegenmaßnahmen erzeugen.

Es ist denkbar, dass eine Aufnehmereinheit gemäß der Erfindung durchaus frontseitig an einem selbstfahrenden Fahrzeug angehängt bzw. fixiert wird. Erfindungsgemäß weist die Erntevorrichtung eine Anhängervorrichtung zum Anhängen der Verstelleinheit an ein motorgetriebenes Fahrzeug auf. Bevorzugt ist die Erntevorrichtung gemäß der Erfindung als landwirtschaftlicher Anhänger ausgebildet, zum Beispiel als Ladewagen, Silierwagen, Kombiwagen und/oder Ballenpresse etc.

Vorzugsweise ist die Aufnehmereinheit als Pick-up ausgebildet. Pick-ups sind bereits vielfach in der Landwirtschaft im Einsatz und können somit handelsüblich und kostengünstig besorgt werden und gemäß der Erfindung in vorteilhafter Weise ausgebildet werden.

Als Gegenmaßnahme bzw. Ausgleichsmaßnahme zur Verhinderung einer Beeinträchtigung bei großer Beschleunigung bzw. beim Überschreiten einer vorgegebenen Beschleunigung stehen unterschiedlichste Möglichkeiten zur Verfügung. Beispielsweise kann ein Tragrahmen der Erntevorrichtung gegenüber Laufrädern angehoben werden. Dies ist beispielsweise bei frontseitig angeordneten Aufnahmevorrichtungen für Selbstfahrer bevorzugt anzuwenden, ist jedoch auch für Anhänger denkbar. Dieses Anheben des Tragrahmens kann in vorteilhafter Weise automatisiert von einer Kontrolleinheit über eine vorteilhafte Heb- bzw. Hubeinheit oder dergleichen umgesetzt werden.

Eine denkbare Alternative hierzu könnte durchaus auch ein vertikales Anheben der Aufnehmereinheit einschließlich der folgenden Komponenten bzw. Vorrichtungen der Gutaufnahme relativ zum Tragrahmen realisiert werden. Beispielsweise könnte durchaus auch ein Laderotor eines Ladewagens in vorteilhafter Weise vertikal nach oben verstellt werden, so dass sich der Öffnungswinkel eines Pick-ups zu diesem Laderotor nicht nachteilig verkleinert. Hierfür könnte beispielsweise der Laderotor mittels einer Hebeeinheit vertikal nach oben verstellt werden, ohne dass nennenswerte Beeinträchtigungen beispielsweise des Ladevolumens entstehen würden, zumal moderne Ladewagen im Allgemeinen das Erntegut in den Laderaum unter anderem mit Hilfe von Schneidkomponenten einpressen.

Bei den vorgenannten Varianten in Form von Anhängerausführungen können diese Anhänger durchaus als Deichselanhänger in Form eines Sattelanhängers oder Tandemanhängers oder Einachsanhängers oder sogar als Mehrachsanhänger realisiert werden.

Gemäß der Erfindung umfasst die Anhängervorrichtung wenigstens eine Hebevorrichtung zum Heben oder Senken der Aufnehmereinheit und/oder eines Tragrahmens der Erntevorrichtung. Hiermit kann in vorteilhafter Weise die Aufnehmereinheit bzw. der Tragrahmen angehoben und/oder abgesenkt werden.

Erfindundsgemäß weist die Hebevorrichtung wenigstens eine Drehachse zum Verdrehen der Anhängervorrichtung in Bezug zur Aufnehmereinheit und/oder zum Tragrahmen der Erntevorrichtung auf. Beispielsweise ist die Anhängervorrichtung als Anhängerdeichsel ausgebildet, die um eine horizontal angeordnete Drehachse drehbar gelagert ist. Diese Lagerung kann beispielweise mit Hilfe einer Hubkolbenzylindereinheit, einem Stellmotor oder dergleichen, vorzugsweise mittels Hydraulik- oder Pneumatikantrieb in vorteilhafter Weise gemäß der Erfindung verstellt werden. Hiermit wird es möglich, dass als Gegenmaßnahme bzw. Ausgleichsmaßnahme bei einer vergleichsweise großen Beschleunigung der Aufnehmereinheit gemäß der Erfindung zumindest der Bereich der Erntevorrichtung bzw. des Anhängers angehoben wird, an dem die Aufnehmereinheit angeordnet ist. Das bedeutet, dass beispielsweise der vordere Teil eines Ladewagens oder einer Ballenpresse oder dergleichen durch ein entsprechend vorteilhaftes Abwinkeln der Anhängevorrichtung bzw. der Anhängerdeichsel in der Weise angehoben wird, dass eine gemäß der Erfindung beschleunigte Aufnehmervorrichtung bzw. Pick-up nicht dazu führt, dass es zu Gutaufnahmeproblemen kommt, zum Beispiel aufgrund von einem zu geringen Öffnungswinkel der Aufnehmervorrichtung bzw. Pick-up gegenüber dem Laderotor bzw. dem Tragrahmen der Erntevorrichtung. Das heißt, dass eine in vertikaler Richtung nach oben beschleunigte Aufnehmereinheit bzw. Pick-up dazu führt, dass zumindest der Bereich der Erntevorrichtung, an dem die Aufnehmereinheit angeordnet ist, durch ein Abwinkeln der Anhängedeichsel ebenfalls in vertikaler Richtung nach oben verstellt wird. Aufgrund dieser vertikalen Verstellung der Erntevorrichtung wird ein zu kleiner Querschnitt der Gutaufnahme bzw. ein zu kleiner Öffnungswinkel der Aufnehmereinheit/Pick-up gegenüber dem Tragrahmen und/oder dem Laderotor oder dergleichen wirkungsvoll verhindert.

Gemäß der Erfindung wird im Vergleich zum Stand der Technik erheblich frühzeitiger das Einleiten von zuvor dargelegten Gegenmaßnahmen bzw. Ausgleichsmaßnahmen erreicht. Das bedeutet, dass gemäß der Erfindung ein bedeutender Zeitgewinn für zum Teil vergleichsweise träge Gegenmaßnahmen gewonnen wird, so dass Beeinträchtigungen der Erntegutaufnahme wirkungsvoll verhindert werden können. Zudem ist die erfindungsgemäße Erfassung der Beschleunigung unabhängig von den Ursachen der Beschleunigung, d. h. von Hindernissen, die vor der Aufnehmereinheit bzw. Pick-up vorkommen oder Hindernissen, über die die Laufräder des Anhängers bzw. der Erntemaschine oder der Zugmaschine fahren, und unabhängig davon, ob es sich hier um Erhebungen oder Ausnehmungen bzw. Mulden handelt.

Besondere Vorteile der vorliegenden Erfindung sind somit die Unabhängigkeit des Grundes, warum die Aufnehmervorrichtung ihre Position verändert und insbesondere auch warum diese die Position so schnell bzw. beschleunigt ändert. Somit ist die vorliegende Erfindung nicht nur schneller bei der Einleitung von Gegenmaßnahmen, sondern auch umfassender bzw. unabhängig vom Grund der Positionsveränderung bzw. Beschleunigung. Dementsprechend erhöht sich die Betriebssicherheit bzw. führt die vorliegende Erfindung zu einer effizienteren Erntegutaufnahme, ohne Beeinträchtigung aufgrund von nicht erfassten Hindernissen oder dergleichen.

Vorteilhafterweise ist wenigstens ein Positionssensor zum Erfassen der Position der Aufnehmereinheit vorgesehen. So kann beispielsweise zusätzlich zur Beschleunigungserfassung ein Positionssensor im Sinne des Stands der Technik verwendet werden, um langsame Veränderungen der Position der Aufnehmereinheit bzw. der Pick-up ebenfalls zu erfassen. Zum Beispiel wird durch das Beladen eines Ladewagens oder Silowagens oder dergleichen ein allmähliches, langsames Absenken des Laderaumes, einerseits aufgrund von Absenkungen der Federung und/oder andererseits aufgrund eines tieferen Einsinkens der Laufräder im Boden bzw. im Feld generiert. Dies kann mit Hilfe vorteilhafter Ausgleichs- bzw. Gegenmaßnahmen entsprechend ausgeglichen werden. Beispielsweise kann die Winkelverstellung der drehbar ausgebildeten Anhängerdeichsel entsprechend in vorteilhafter Weise angepasst werden.

Darüber hinaus kann der vorteilhafte Positionssensor wie bereits dargelegt, auch dafür verwendet werden, dass bei einer vorgegebenen Positionsänderung bzw. eines Verstellweges der Aufnehmereinheit eine Zeitdauer zusätzlich ermittelt wird und diese Zeitdauer gemäß der Erfindung zur Erfassung einer Beschleunigung bzw. als entsprechende, proportionale Information für die Beschleunigung der Aufnehmereinheit verwendbar ist. Somit wird dieser Positionssensor in doppelter Weise eingesetzt, einerseits als reiner Positionssensor und andererseits vor allem mit Hilfe einer vorteilhaften Zeiterfassung als Beschleunigungssensor gemäß der Erfidung.

Vorteilhafterweise ist der Positionssensor zum Erfassen eines Winkels in Bezug zur Verstelleinheit und eines Tragrahmens und/oder einer Aufhängung der Aufnehmereinheit ausgebildet. Entsprechend kann der Winkel als Wegvektor verwendet werden.

Vorzugsweise ist der Positionssensor zum Erfassen eines Abstands der Aufnehmereinheit zur Verstelleinheit und/oder Anhängevorrichtung ausgebildet.

In einer besonderen Weiterbildung der Erfindung ist wenigstens eine Beschleunigungsrecheneinheit zum Berechnen der translatorischen und/oder rotatorischen Beschleunigung der Aufnehmereinheit aus der Position und/oder dem Winkel und/oder dem Abstand vorgesehen, insbesondere mittels einer vorteilhaften Zeiterfassungseinheit. Hiermit kann eine vorteilhafte indirekte Berechnung bzw. Erfassung der Beschleunigung gemäß der Erfindung realisiert werden. Vor allem in Kombination mit einer vorteilhaften Beschleunigungsrecheneinheit können beispielsweise Abstands- und/oder Näherungssensoren und/oder Drehwinkelsensoren und/oder Lichtschranken oder dergleichen in vorteilhafter Weise gemäß der Erfindung verwendet werden.

Vorzugsweise ist wenigstens eine Kontrolleinheit zum Kontrollieren und/oder Einstellen bzw. Aktivieren der Hebevorrichtung und/oder der Verstelleinheit und/oder der Position und/öder dem Winkel und/oder dem Abstand der Aufnehmereinheit vorgesehen. Die unterschiedlichen Möglichkeiten für einen Ausgleich bzw. Gegenmaßnahmen sind eingangs bereits beispielhaft dargelegt. So kann die vorteilhafte Kontrolleinheit mit Hilfe der erfindungsgemäßen Inertialsensorvorrichtung in vorteilhafter Weise kombiniert werden.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: schematisch ein Traktor-Silowagen-Gespann mit einer erfindungsgemäßen Aufnehmereinheit bei einer Berg- oder Talfahrt bzw. Durchfahren von Senken,
- Figur 2: schematisch das Gespann gemäß Figur 1 bei der Überfahrt von Erdhaufen oder Löchern und
- Figur 3: schematisch das Gespann gemäß Figur 1 beim Einsacken durch Zuladung.

Ein Traktor 1 zieht einen Anhänger 2 über eine Anhängedeichsel 3. Beim Anhänger 2 handelt es sich beispielsweise um einen Silowagen 2 mit einem Pick-up 4. Der Pick-up 4 weist eine Rotationsachse 5 auf, um die er verschwenkt bzw. verdreht werden kann. Stützräder 6 des Pick-ups 4 führen diese entlang einer Kontur 7 des Feldes, von dem nicht näher dargestelltes Erntegut wie Pflanzen bzw. Pflanzenteile aufzunehmen sind.

Beispielsweise zum Ausgleichen eines Abstands 8 des Pick-ups 4 zur Deichsel 3 weist die Deichsel 3 eine Rotationsachse 9 auf, um die sie verschwenkt werden kann. Zur Festlegung der Position der Deichsel 3 in Bezug zu einem Tragrahmen des Anhängers 2 kann in vorteilhafter Weise ohne nähere Darstellung eine Hubeinheit bzw. eine hydraulische Hubkolbenzylindereinheit vorgesehen werden. Dementsprechend kann durch ein Verschwenken der Deichsel 3, um die Rotationsachse 9, eine Höhe des Anhängers 2, insbesondere im vorderen Frontbereich, an dem der Pick-up 4 angeordnet ist, nach oben oder nach unten verstellt werden. Somit kann auch der Pick-up 4 als solcher nach oben bzw. nach unten verstellt werden.

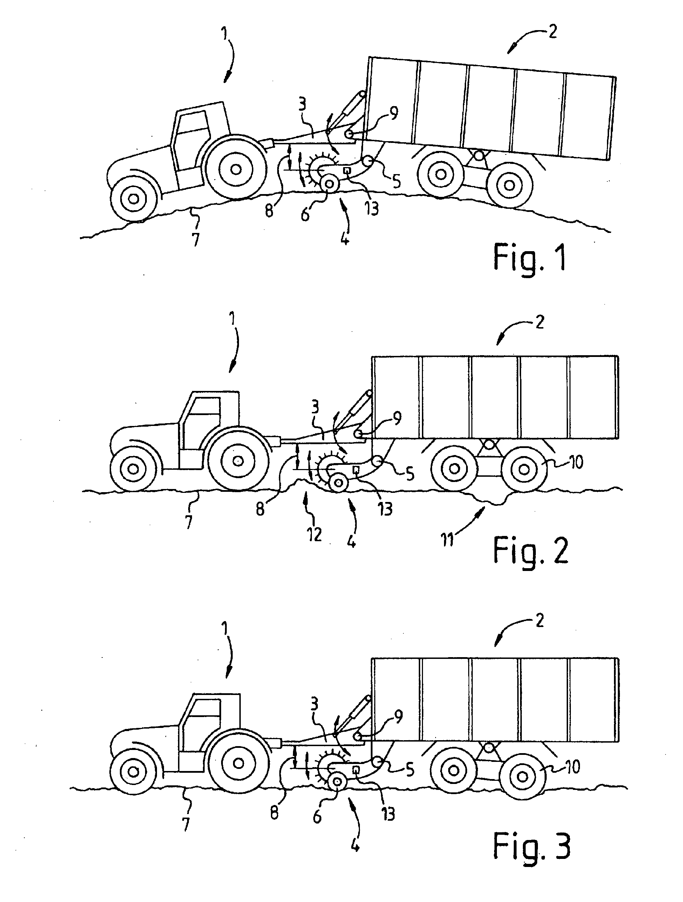

Mit bislang handelsüblichen Systemen kann lediglich eine kontinuierliche bzw. allmähliche Veränderung der Position des Pick-ups 4 bzw. der Winkelstellung, wie z.B. eine Rotation um die Drehachse 5, erfasst werden und beispielsweise zur Verstellung der Deichsel 3 um die Rotationsachse 9 verwendet werden. Bei Anwendungsfällen gemäß Figur 1 oder 3 ist dies schematisch dargestellt für Berg- oder Talfahrten oder auch bei einem allmählichen Einsacken des Anhängers 2 aufgrund der Zunahme des Landungsgewichtes. Bei der in Figur 3 dargestellten Situation sackt nicht nur der Anhänger 2 im Feld bzw. dessen Laufräder 10 ein, sondern auch der Traktor 1 sackt etwas im Feld bei zunehmendem Ladegewicht ein, so dass der Pick-up 4 relativ nach oben in Richtung Deichsel 3 verstellt wird. Das heißt, der Abstand 8 zwischen Deichsel 3 und Pick-up 4 verringert sich allmählich.

Bei einem Anwendungsfall gemäß Figur 2 mit einer relativ kleinen Mulde 11 und/oder einem Erdhaufen 12 sind jedoch Systeme gemäß dem Stand der Technik nur bedingt zum Einleiten von Gegenmaßnahmen bzw. Ausgleichsmaßnahmen geeignet. Beispielsweise kann ein bislang bekannter Hindernissensor, der unmittelbar vor der Pick-up 4 angeordnet ist, gegebenenfalls eine Erhebung 12 oder eine Mulde 11, in die nur die Laufräder 10 des Anhängers 2 "eintauchen", nicht erfassen. Entsprechendes trifft auch für Hindernisse wie Erdhaufen 12 oder Mulden 11 zu, über die der Traktor 1 fährt. Auch diese werden von Hindernissensoren eines Ladewagens bzw. Anhängers 2 im Allgemeinen nicht erfasst, führen jedoch durchaus auch zu einer nachteiligen Veränderung der Position der Pick-up 4 gegenüber dem Tragrahmen des Anhängers 2 bzw. gegenüber der Deichsel 3.

Gemäß der Erfindung wird nunmehr vor allem die Beschleunigung des Pick-ups 4 mittels eines nur schematisch dargestellten Sensors 13 erfasst. Dies führt dazu, dass das gesamte Gespann von Traktor 1 und Anhänger 2 unabhängig wird von der Ursache einer Positionsänderung bzw. Beschleunigung der Pick-up 4.

Darüber hinaus ist gemäß der Erfindung bzw. mit Hilfe des vorteilhaften Beschleunigungssensors 13 gemäß der Erfindung der Anhänger bzw. das Gespann auch unabhängig davon in welcher Position der Pick-up 4 gerade im "Normalzustand" während der Erntephase angeordnet ist. Das bedeutet, dass beispielsweise der Öffnungswinkel des Pick-ups 4 gegenüber dem Tragrahmen oder der Deichsel 3 bei einer Berg- oder Talfahrt möglichst im optimalen Bereich eingestellt wird. Bei einem Hindernis wie einem Erdhaufen 12 oder einer Mulde 11 wird die starke Beschleunigung des Pick-ups 4 erfasst und unmittelbar zu einem schnellen Ausgleichen durch die Deichselverstellung um die Rotationsachse 9 verwendet. Hierdurch wird das Gespann auch unabhängig von Ladegewicht des Anhängers 2 bzw. vom Einsacken aufgrund der Zunahme des Ladegewichtes.

Dementsprechend können im Fall von Bodenunebenheiten bei einem Arbeitseinsatz des Pick-ups 4 dieser in die Arbeitsposition gebracht und beispielsweise beweglich gelagert werden, um mit Hilfe der Stützräder 6 Bodenunebenheiten folgen zu können. Durch die Konstruktion bedingt ist bislang die Bewegungsfähigkeit eingeschränkt, besonders nach oben kann der Pick-up 4 nur bis in seine mechanische Endlage verstellt werden. Sollte diese erreicht werden, dann stützt sich das gesamte Trägerfahrzeug bzw. Traktor 1 mit einer sehr hohen Stützlast auf den Pick-up sowie die Stützräder 6 des Pick-ups 4 auf. Dies hat zur Folge, dass hierbei einerseits mechanische Schäden an dem Pick-up 4 und den Stützrädern 6 auftreten können, und zum anderen wird die Grasnarbe empfindlich beschädigt. Gemäß der Erfindung wird dies wirkungsvoll vermieden.

In einem anderen Fall gemäß Figur 3 sinkt das gesamte Gespann immer tiefer in den Boden bzw. ins Feld 7 durch das zunehmende Ladegewicht ein. Durch die Stützräder 6 sinkt jedoch der Pick-up 4 nicht entsprechend ein, so dass sich dieser relativ nach oben bewegt, was zur Folge hat, dass sich der Öffnungswinkel zwischen Pick-up 4 und beispielsweise einem Laderotor oder dergleichen immer mehr verkleinert. Dieses Verkleinern des Öffnungswinkels führt zu Gutannahmeproblemen, die sich dann bis hin zu Stopfern ausnehmen können. Beides führt zu Stillstandzeiten und somit zu einem sehr ineffizienten Arbeitsablauf. Auch dies wird durch die Erfindung wirkungsvoll vermieden.

Darüber hinaus sind bereits Systeme im Einsatz, wobei eine verstellbare Anhängevorrichtung bzw. Deichsel 3 durch den Fahrer des Schleppers 1 eingestellt bzw. angesteuert werden kann, so dass durch die Position der Deichsel 3 die Position der Pick-up 4 für den Betrieb eingestellt wird. Hierbei kam es bislang durchaus zu Fehleinstellungen durch den Bediener bzw. Fahrer und somit konnte ein störungsfreies Arbeiten nicht erreicht werden. Auch dies wird gemäß der Erfindung in vorteilhafter Weise beseitigt.

Vorzugsweise wird gemäß der Erfindung die Position des Pick-ups 4 kontinuierlich geprüft bzw. erfasst und sollte sich der Pick-up 4 außerhalb eines definierten Öffnungswinkelbereichs befinden, wird in vorteilhafter Weise mittels der verstellbaren Anhängevorrichtung 3 bzw. Deichsel 3 das Trägerfahrzeug bzw. der Anhänger 2 nachgesteuert, um den Pick-up 4 wieder in einen vorteilhaften bzw. definierten Öffnungswinkelbereich zu positionieren.

Weiterhin wird erfindungsgemäß die Beschleunigung des Pick-ups 4 ermittelt bzw. erfasst und bei Überschreiten eines definierten Wertes bzw. Grenzwertes wird in vorteilhafter Weise nachgesteuert, zum Beispiel gemäß der in den Figuren dargestellten Variante durch Verdrehen der Deichsel 3 um die Rotationsachse 9, so dass der Anhänger 2 im vorderen Bereich bzw. im Bereich des Pick-ups 4 angehoben wird.

Die Beschleunigung des Pick-ups 4 gibt Aufschluss darüber, ob der Pick-up 4 auf einen Hügel 12 oder ähnliches aufgefahren ist, da in diesem Fall eine schnelle Bewegung des Pick-ups 4 messbar ist. Ebenfalls wird die Beschleunigung des Pick-ups 4 in die andere Richtung ermittelt, um zum Beispiel eine Mulde 11 oder einen kleinen Graben etc. zu erfassen. Auch in diesem Fall kann das Trägerfahrzeug bzw. der Anhänger 2 durch die verstellbare Anhängervorrichtung 3 nachgesteuert werden.

Zusammenfassend kann somit festgestellt werden, dass durch das erfindungsgemäße System alle zuvor dargelegten Anwendungsfälle bzw. die bei bislang aufgetretenen Beeinträchtigungen mit einer verstellbaren Anhängervorrichtung bzw. Deichsel 3 bei der Gutaufnahme in vorteilhafter Weise realisiert werden können, vorzugsweise vollautomatisch ausgeglichen bzw. gelöst werden und ein höchst effizienter Arbeitsablauf ermöglicht wird.

Durch die zwischenzeitlich relativ schnellen Fahrgeschwindigkeiten landwirtschaftlicher Maschinen sowohl auf der Straße als auch auf dem Feld werden vergleichsweise große (wenigstens teilweise vertikal ausgerichtete) Beschleunigungen der Aufnehmervorrichtung 4 bzw. Pick-up 4 generiert, die gemäß der Erfindung erfasst werden können. Zudem werden die hierbei erzeugbaren Stellsignale in vorteilhafter Weise ausgewertet und/oder zur Einleitung von Ausgleichs- bzw. Gegenmaßnahmen bzgl. der Anordnung und/oder Ausrichtung der Aufnehmervorrichtung 4 bzw. Pick-up 4 verwendet.

### Bezugszeichenliste

- 1: Schlepper
- 2: Anhänger
- 3: Deichsel
- 4: Pick-up
- 5: Drehachse
- 6: Stützrad
- 7: Feldkontur
- 8: Abstand
- 9: Rotationsachse
- 10: Laufräder
- 11: Mulde
- 12: Erdhaufen
- 13: Beschleunigungssensor

## Patentansprüche

1. Erntevorrichtung zum Ernten und/oder Aufnehmen von auf dem Feld angeordneten Pflanzen oder Pflanzenteile, mit wenigstens einer Aufnehmereinheit (4) zum Aufnehmen der Pflanzen oder Pflanzenteile, wobei eine Verstelleinheit zum zumindest teilweise vertikalen Verstellen der Aufnehmereinheit (4) vorgesehen ist und eine Anhängevorrichtung (3) zum Anhängen der Verstelleinheit an einem motorgetriebenen Fahrzeug (1) aufweist, welche wenigstens eine Hebevorrichtung zum Heben oder Senken der Aufnehmereinheit (4) und/oder eines Tragrahmens der Erntevorrichtung (2) umfasst, wobei die Hebevorrichtung wenigstens eine Drehachse (9) zum Verdrehen der Anhängevorrichtung (3) in Bezug zur Aufnehmereinheit (4) aufweist, **dadurch gekennzeichnet, dass** wenigstens eine Inertialsensorvorrichtung (13) zum Erfassen einer translatorischen und/oder rotatorischen Beschleunigung der Aufnehmereinheit (4) vorgesehen ist.

2. Vorrichtung nach Anspruch 1, **dadurch gekennzeichnet, dass** die Verstelleinheit wenigstens eine Rotationsachse (5) zum Verstellen und Rotieren der Aufnehmereinheit (4) um die Rotationsachse (5) aufweist.

3. Vorrichtung nach Anspruch 2, **dadurch gekennzeichnet, dass** die Inertialsensorvorrichtung (13) als Drehratensensor zum Erfassen der Rotations- bzw. Winkelbeschleunigung um die Rotationsachse (5) ausgebildet ist.

4. Vorrichtung nach einem der vorgenannten Ansprüche, **dadurch gekennzeichnet, dass** die Anhängevorrichtung (3) als Anhängedeichsel (3) zum Anhängen an ein Zugfahrzeug (1) ausgebildet ist.

5. Vorrichtung nach einem der vorgenannten Ansprüche, **dadurch gekennzeichnet, dass** wenigstens ein Positionssensor zum Erfassen der Position der Aufnehmereinheit (4) vorgesehen ist.

6. Vorrichtung nach Anspruch 5, **dadurch gekennzeichnet, dass** der Positionssensor zum Erfassen eines Winkels in Bezug zur Verstelleinheit ausgebildet ist.

7. Vorrichtung nach einem der Ansprüche 5 oder 6, **dadurch gekennzeichnet, dass** der Positionssensor zum Erfassen eines Abstands (8) der Aufnehmereinheit (4) zur Anhängevorrichtung (3) ausgebildet ist.

8. Vorrichtung nach Anspruch 7, **dadurch gekennzeichnet, dass** wenigstens eine BeschleunigungsRecheneinheit zum Berechnen der translatorischen und/oder rotatorischen Beschleunigung der Aufnehmereinheit (4) aus der Position und/oder dem Winkel und/oder dem Abstand (8) vorgesehen ist.

9. Vorrichtung nach einem der Ansprüche 7 order 8, **dadurch gekennzeichnet, dass** wenigstens eine Kontrolleinheit zum Kontrollieren und/oder Einstellen bzw. Aktivieren der Hebevorrichtung und/oder der Verstelleinheit und/oder der Position und/oder dem Winkel und/oder dem Abstand (8) der Aufnehmereinheit (4) vorgesehen ist.

10. Vorrichtung nach einem der vorgenannten Ansprüche, **dadurch gekennzeichnet, dass** die Vorrichtung als Ladewagen (2) oder Presse oder Pick-up (4) für Feldhäcksler oder Aufnehmer für Mähdrescher ausgebildet ist.

11. Landwirtschaftliches Fahrzeug (1, 2), **dadurch gekennzeichnet, dass** es eine Vorrichtung nach einem der vorgenannten Ansprüche aufweist.

## Claims

1. A harvesting apparatus for harvesting and/or picking up plants or plant pieces on the field, comprising at least one pick-up unit (4) for picking up the plants or plant pieces, wherein an adjusting unit is provided for at least partially vertically adjusting the pick-up unit (4) and has an attachment device (3) for attaching the adjusting unit to a motor-driven vehicle (1), which includes at least one lifting device for lifting or lowering the pick-up unit (4) and/or a carrier frame of the harvesting apparatus (2), wherein the lifting device has at least one axis of rotation (9) for rotation of the attachment device (3) in relation to the pick-up unit (4), **characterised in that** there is provided at least one inertial sensor device (13) for detecting a translatory and/or rotary acceleration of the pick-up unit (4).

2. Apparatus according to claim 1 **characterised in that** the adjusting unit has at least one axis of rotation (5) for adjustment and rotation of the pick-up unit (4) about the axis of rotation (5).

3. Apparatus according to claim 2 **characterised in that** the inertial sensor device (3) is in the form of a rotary rate sensor for detecting the rotary or angular acceleration about the axis of rotation (5).

4. Apparatus according to one of the preceding claims **characterised in that** the attachment device (3) is in the form of an attachment drawbar (3) for attachment to a tractor vehicle (1).

5. Apparatus according to one of the preceding claims **characterised in that** there is provided at least one position sensor for detecting the position of the pick-up unit (4).

6. Apparatus according to claim 5 **characterised in that** the position sensor is adapted to detect an angle in relation to the adjusting device.

7. Apparatus according to one of claims 5 and 6 **characterised in that** the position sensor is adapted to detect a spacing (8) of the pick-up unit (4) relative to the attachment device (3).

8. Apparatus according to claim 7 **characterised in that** there is provided at least one acceleration calculating unit for calculating the translatory and/or rotary acceleration of the pick-up unit (4) from the position and/or the angle and/or the spacing (8).

9. Apparatus according to one of claims 7 and 8 **characterised in that** there is provided at least one control unit for controlling and/or adjusting or activating the lifting device and/or the adjusting unit and/or the position and/or the angle and/or the spacing (8) of the pick up unit (4).

10. Apparatus according to one of the preceding claims **characterised in that** the apparatus is in the form of a loading wagon (2) or press or pick-up (4) for a forage harvester or a pick-up apparatus for a combine harvester.

11. An agricultural vehicle (1, 2) **characterised in that** it has an apparatus according to one of the preceding claims.

## Revendications

1. Dispositif de récolte pour récolter et/ou ramasser des plantes ou parties de plantes disposées sur le champ, comprenant au moins une unité de ramassage (4) pour ramasser les plantes ou parties de plantes, une unité de déplacement pour le déplacement au moins partiellement vertical de l'unité de ramassage (4) étant prévue et comportant un dispositif d'attelage (3) pour atteler l'unité de déplacement à un véhicule motorisé (1), lequel comprend au moins un dispositif de levage pour lever ou abaisser l'unité de ramassage (4) et/ou un châssis porteur du dispositif de récolte (2), le dispositif de levage comportant au moins un axe de rotation (9) pour faire tourner le dispositif d'attelage (3) par rapport à l'unité de ramassage (4), **caractérisé en ce qu'**au moins un dispositif à capteur inertiel (13) est prévu pour détecter une accélération en translation et/ou en rotation de l'unité de ramassage (4).

2. Dispositif selon la revendication 1, **caractérisé en ce que** l'unité de déplacement comporte au moins un axe de rotation (5) pour déplacer et faire tourner l'unité de ramassage (4) autour de l'axe de rotation (5).

3. Dispositif selon la revendication 2, **caractérisé en ce que** le dispositif à capteur inertiel (13) est conformé en capteur de taux de rotation pour détecter l'accélération en rotation ou angulaire autour de l'axe de rotation (5).

4. Dispositif selon une des revendications précédentes, **caractérisé en ce que** le dispositif d'attelage (3) est conformé en timon d'attelage (3) pour l'atteler à un véhicule de traction (1).

5. Dispositif selon une des revendications précédentes, **caractérisé en ce qu'**au moins un capteur de position est prévu pour détecter la position de l'unité de ramassage (4).

6. Dispositif selon la revendication 5, **caractérisé en ce que** le capteur de position est conçu pour détecter un angle par rapport à l'unité de déplacement.

7. Dispositif selon une des revendications 5 ou 6, **caractérisé en ce que** le capteur de position est conçu pour détecter un écartement (8) de l'unité de ramassage (4) au dispositif d'attelage (3).

8. Dispositif selon la revendication 7, **caractérisé en ce qu'**au moins une unité de calcul d'accélération est prévue pour calculer l'accélération en translation et/ou en rotation de l'unité de ramassage (4) à partir de la position et/ou de l'angle et/ou de l'écartement (8).

9. Dispositif selon une des revendications 7 ou 8, **caractérisé en ce qu'**au moins une unité de contrôle est prévue pour contrôler et/ou régler ou activer le dispositif de levage et/ou l'unité de déplacement et/ou la position et/ou l'angle et/ou l'écartement (8) de l'unité de ramassage (4).

10. Dispositif selon une des revendications précédentes, **caractérisé en ce que** le dispositif est conformé en remorque autochargeuse (2) ou en presse ou en pick-up (4) pour ensileuse ou en ramasseur pour moissonneuse-batteuse.

11. Véhicule agricole (1, 2) **caractérisé en ce qu'**il comporte un dispositif selon une des revendications précitées.
